# EUROPEAN PATENT SPECIFICATION

(11) **EP 3 642 015 B1**
(45) Date of publication and mention of the grant of the patent: **25.01.2023**
(21) Application number: 17929163.8
(22) Date of filing: 18.10.2017
(51) Int. Cl.: B29C 64/329, B33Y 40/00, B65D 88/28, B29C 31/02, B65B 1/16

(54) **BUILD MATERIAL HOPPER FOR 3D PRINTING SYSTEMS AND METHOD**
BAUMATERIALBEHÄLTER FÜR 3D-DRUCK-SYSTEME UND METHOD
TRÉMIE DE MATÉRIAU DE CONSTRUCTION POUR SYSTÈMES D'IMPRESSION 3D ET MÉTHODE

(43) Date of publication of application: 29.04.2020
(73) Proprietor: Hewlett-Packard Development Company, L.P., Houston, TX 77070 (US)
(72) Inventor: LAMBRIGHT, Terry, Corvallis, Oregon 97330-4239 (US); SMITH, Kelly B, Corvallis, Oregon 97330-4239 (US)
(74) Representative: HGF
(86) International application number: PCT/US2017/057221
(87) International publication number: WO 2019/078856

(56) References cited:
- EP-A2- 1 162 140
- WO-A1-2004/035435
- US-A- 4 620 795
- US-A- 5 437 820
- US-A1- 2005 074 550
- US-A1- 2005 074 550
- US-A1- 2009 068 376
- US-A1- 2016 311 167
- US-B2- 8 185 229

## Description

### BACKGROUND

Additive manufacturing processes can produce three-dimensional (3D) parts by providing a layer-by-layer accumulation and solidification of build material patterned from digital models. In some examples, powdered build material such as powdered nylon can be processed using heat to cause melting and solidification of the material in selected regions of each layer. In some examples, the solidification of powdered build material can be accomplished in other ways, such as through the use of binding agents or chemicals. The solidification of selected regions of powdered build material can form 2D cross-sectional layers of the 3D object being produced, or printed.

US 2005/0074550 discloses a device for treating powder for a device for producing a three-dimensional object by means of a generative manufacturing process, in which there is a device for supplying a fluid medium into a chamber. WO 2004/035435 discloses a vessel for storing particulate matter, such as pulverised coal or fly ash, and discharge device for use in the same. EP 1162140 discloses a system and method for dispensing powders which includes a dispensing container and a fluidizing system.

### BRIEF DESCRIPTION OF THE DRAWINGS

Examples will now be described with reference to the accompanying drawings, in which:
FIG. 1 shows an example of a build material hopper for a 3D printing system;
FIG. 2 shows a cross-sectional view of an example fluidizing drain assembled within the floor of an example build material hopper;
FIGs. 3 and 4 show cross-sectional views of an example fluidizing drain;
FIG. 5 shows a perspective view of an example of an inner shell of a fluidizing drain
FIG. 6 shows a block diagram illustrating an example 3D printing system in which a build material hopper comprising a fluidizing drain may be implemented;
FIG. 7 shows a flow diagram of an example method of providing build material from a hopper in a 3D printing system.

Throughout the drawings, identical reference numbers designate similar, but not necessarily identical, elements.

### DETAILED DESCRIPTION

The invention relates to a build material hopper for a 3D printing system, as disclosed in claim 1, and a method of providing build material from a hopper in a 3D printing system, as disclosed in claim 6. Additive manufacturing processes such as 3D printing can use different types of build materials to produce parts or objects having a variety of different characteristics. For example, powdered build materials such as powdered nylon or other plastic are often used in 3D printing. The fine dust-like particles in such powdered build materials can help to produce sharp details in the 3D printed parts. While example methods and devices related to example build material hoppers are discussed herein with regard to powdered build materials, such methods and devices may be equally applicable for use with other types of build materials that may be available now or in the future. Thus, in different examples, such methods and devices may be applicable to various types and forms of build materials such as short fiber build materials, for example, that have been cut into short lengths from long strands or threads of material. Other examples of build materials include, but are not limited to, plastics, ceramics, metal powders, other powder-like materials, and so on. Accordingly, references herein to powder as a build material are intended to include various other types of build material that may be applicable for use in a variety of different additive manufacturing and 3D printing processes and systems.

In some examples, 3D printing processes can include spreading layers of powdered build material over a platform or print bed within a work area. A fusing agent can be selectively applied to each layer where the particles of powdered material are to be fused together. Each layer in the work area can be exposed to a fusing energy to melt and fuse together the particles of powdered material where the fusing agent has been applied. The process can then be repeated, one layer at a time, until a 3D part or 3D parts have been formed within the work area. Other 3D printing processes can also use powdered build material, such as selective laser sintering (SLS) which uses heat from a laser to fuse together particles of powdered material to form 3D parts. While powder-based, fusing agent, 3D printing systems are discussed herein as systems for implementing example build material hoppers, the use of such build material hoppers is not limited to such systems. Example build material hoppers described herein may be applicable in various other additive manufacturing and 3D printing systems such as chemical binder systems, metal type 3D printing systems, and so on.

In some example 3D printing systems, build material hoppers can be used to collect and temporarily store build material, such as powder build material, before dispensing the material into other areas of the 3D printing system. For example, powder can be held in a build material hopper and then passed through a drain in the bottom of the hopper into a pneumatic powder conveyance system. In some examples, the powder can drop through the drain of the hopper under the force of gravity. The pneumatic powder conveyance system can then transport the powder to another area of the 3D printing system, such as to a build area of the system.

In different examples, build material hoppers can comprise container housings that are shaped with varying geometries that can affect the movement of build material, such as powder, through the drain of the hopper. For example, a hopper can have a container housing that is funnel-shaped, with a continuous, cylindrical wall that is slanted and slopes toward the drain. Such a geometry may facilitate the movement of powder through drain, while a build material hopper with a square or rectangular shaped container housing having multiple straight walls may not. Similarly, hopper drains can have varying geometries that can affect the movement of powder through the drain. For example, a drain with a funnel shape can cause the powder to become compressed, or packed together within the drain as the funnel narrows. Powder that is packed together too tightly may get stuck in the drain or it may not flow readily through the drain under the force of gravity alone. By contrast, a drain that has straight, vertical walls does not compress the powder as it falls through the drain, which can help the powder flow more freely through the drain. In general, however, while different drain geometries can be more or less favorable to passing powder under the force of gravity, drains are inherently constrictive due to the movement of the powder material from a larger space within the hopper down to a smaller space within the drain itself. Therefore, regardless of the geometry of a particular hopper and/or drain within the hopper, maintaining the flow of powder through drains of build material hoppers within 3D printing systems presents an ongoing challenge.

Accordingly, example methods and devices described herein facilitate the flow of build material such as powdered build material through the drain of a build material hopper, such as a powder hopper in a 3D printing system. An example drain assembled in the floor of a hopper comprises a fluidizing drain that aerates the build material as the material enters the drain and passes through the drain. Aerating the material within the drain helps to keep the material loose and free-flowing, and prevents the material from becoming compressed or packed together. The aeration "fluidizes" the material (e.g., powder) within the drain so that the material behaves more like a fluid and flows through the drain much as a liquid flows through a drain under the force of gravity.

According to the invention, a fluidizing drain includes a two-part structure that forms an annular cavity or compartment to surround an inner wall of the drain. The two-part structure forming the annular cavity comprises an outer solid wall, also referred to as an outer shell of the drain, and the inner wall, also referred to as the inner shell of the drain. The inner wall of the drain comprises a porous material that enables pressurized air within the annular cavity to pass through the inner wall into the drain, where it aerates powder within the drain. Pressurized air from an air pump can pass through a sub-floor compartment underneath the floor of the hopper and into the annular cavity through air inlet ports. The air inlet ports are formed around an upper perimeter of the annular cavity where the inner and outer walls of the drain join together. A sealing system such as an O-ring can be located between the inner and outer walls to create a seal around the lower perimeter of the annular cavity so that the pressurized air entering the air inlet ports is forced through the porous inner wall of the drain and into the powder inside the drain.

In a particular example, a build material hopper for a 3D printing system includes a container housing, a top for receiving build material (e.g., such as powder), and a bottom. The build material hopper also includes a fluidizing drain assembled in the bottom of the container housing to aerate build material within the drain. Aeration of the build material in the drain facilitates passing the build material through the drain.

In another example, a method of providing build material, such as powder, from a hopper in a 3D printing system includes storing build material in a hopper of a 3D printing system, where the hopper includes a housing and a floor with a built-in drain. The method includes fluidizing build material within the drain to facilitate movement of the build material through the drain, out of the hopper, and into another area of the 3D printing system.

In another example, a build material hopper for a 3D printing system includes a fluidizing drain assembled in a floor of the build material hopper. An inner porous shell forms an inner wall of the fluidizing drain, and an outer shell forms an annular cavity around the inner porous shell. The hopper includes an aeration pump to pump pressurized air into the annular cavity. The pressurized air is to pass through the inner porous shell and into the fluidizing drain to aerate build material within the drain.

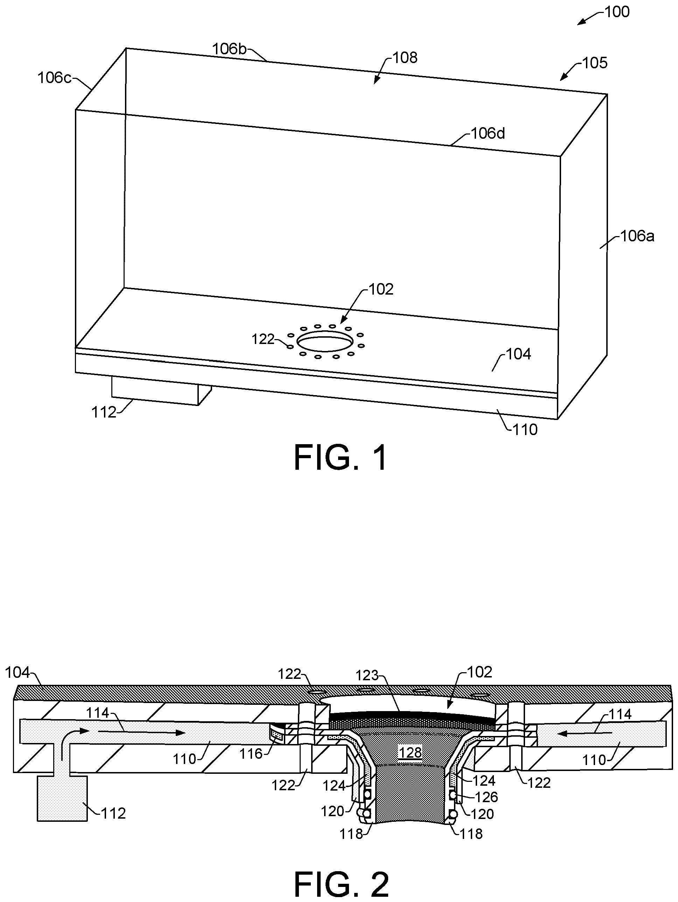

FIG. 1 shows an example of a build material hopper 100 for a 3D printing system. The build material hopper 100 may be alternately referred to herein as a hopper 100, a powder hopper 100, and the like. The hopper 100 comprises a fluidizing drain 102 assembled in the floor 104 or bottom of the hopper 100. The example powder hopper 100 of FIG. 1 comprises a container housing 105 having a rectangular box shape with generally vertical side walls 106 (illustrated as sides 106a, 106b, 106c, 106d), a top 108 that can be open to receive powdered build material, and the floor 104 or bottom with the fluidizing drain 102. The front side wall 106d is shown as transparent to enable a view of the fluidizing drain 102 in the floor 104 of the hopper 100. In general, hoppers with container housings having such rectangular box shapes can accommodate larger amounts of powder material than hoppers with other shapes. However, the powder hopper 100 is not limited to a rectangular box shape, and hoppers having other shapes are possible and are contemplated herein. For example, an alternative shape for a powder hopper may be a hopper with a container housing that is funnel-shaped, with a continuous, cylindrical wall that is slanted and that slopes toward the drain 102 from the top 108 of the hopper to the floor 104 of the hopper.

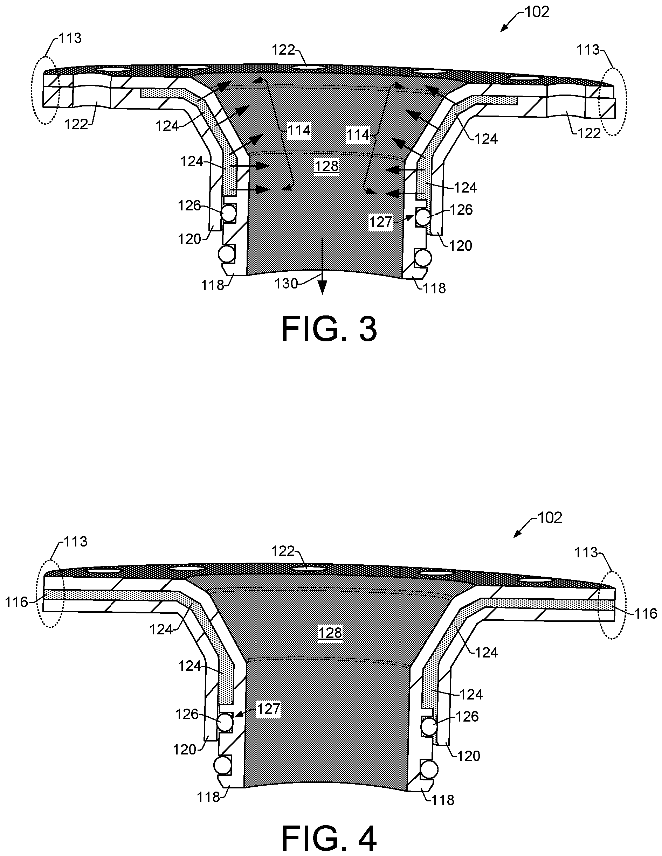

FIG. 2 shows a cross-sectional view of an example fluidizing drain 102 assembled within the floor 104 of an example build material hopper 100. Referring generally to FIGs. 1 and 2, the hopper 100 additionally comprises a sub-floor air compartment 110 located below the floor 104 of the hopper, and an air pump 112 operably coupled to the sub-floor air compartment 110 to provide pressurized air into the compartment 110. The sub-floor air compartment 110 extends around the upper perimeter 113 (see FIGs. 3 and 4) of the fluidizing drain 102 and enables pressurized air (represented by arrows 114) from the air pump 112 to enter into an annular cavity 124 (discussed below) of the fluidizing drain 102 through air inlet ports 116. The air inlet ports 116 are formed in and around the upper perimeter 113 of the drain 102 between a porous (air-permeable) inner shell 118 and an outer shell 120 of the drain 102. The inner shell 118 and outer shell 120 of fluidizing drain 102 can be alternately referred to herein, respectively, as the inner wall 118 and the outer wall 120.

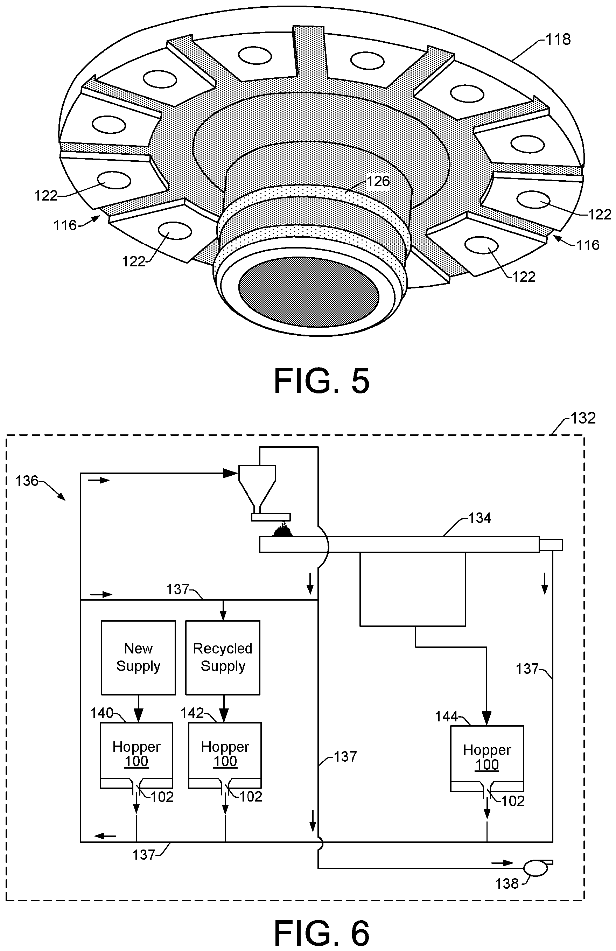

FIGs. 3 and 4 show cross-sectional views of an example fluidizing drain 102. FIG. 3 shows a cross-sectional view of the fluidizing drain 102 taken through coupling holes 122 that can be used to align and fasten together the inner wall 118 and outer wall 120 of the drain 102. As shown in FIGs. 1 and 2, the hopper floor 104 and the sub-floor air compartment 110 also comprise coupling holes 122 that correspond with the coupling holes 122 of the inner wall 118 and the outer wall 120 to enable assembly of the fluidizing drain 102 within the floor 104 of the hopper 100. As shown in FIG. 2, a compressible gasket 123 can be assembled between the inner shell 118 of the drain 102 and the floor 104 of the hopper 102 to prevent pressurized air 114 from escaping between the drain and the floor. Coupling holes 122 can comprise, for example, threaded or unthreaded holes that can accommodate fasteners such as coupling bolts, crimp pins, and so on. FIG. 4 shows a cross-sectional view of the drain 102 taken through air inlet ports 116 that are arranged in between the coupling holes 122 around the upper perimeter 113 of the drain 102. Thus, the two views of the drain shown in FIGs. 3 and 4 are rotated slightly with respect to one another. The location of the air inlet ports 116 in between the coupling holes 122 is made more apparent with reference to FIG. 5.

FIG. 5 shows a perspective view of an example of the inner shell 118 of the fluidizing drain 102. As shown in FIG. 5, air inlet ports 116 are positioned around the upper perimeter 113 of the drain 102 in between the coupling holes 122. Referring now generally to FIGs. 2-5, the fluidizing drain 102 can be assembled within the floor 104 of the build material hopper 100 when the inner shell 118 and outer shell 120 are aligned with the hopper floor 104 and sub-floor compartment 110 through coupling holes 122, and fastened together with fasteners such coupling bolts (not shown). When assembled, the outer shell 120 and inner shell 118 form an annular cavity 124 that surrounds the inner wall 118 of the drain 102. The annular cavity 124 extends at one end to the upper perimeter 113 where the air inlet ports 116 are located. Thus, the annular cavity 124 can be said to begin at the air inlet ports 116 around the upper perimeter 113. The annular cavity 124 extends at the other end to an O-ring gasket 126 that forms a lower perimeter of the cavity 124. The O-ring gasket 126 can be seated into an annular slot 127 that extends around the porous inner wall 118. The seated O-ring gasket 126 extends around the inner shell 118 and creates an air-tight seal of the annular cavity 124 between the inner shell 118 and outer shell 120 of the drain 102.

As noted above, the inner shell 118 comprises a porous material that is permeable to pressurized air 114 (FIG. 2) that enters into the annular cavity 124 through air inlet ports 116. As shown in FIG. 3, the pressurized air 114 passes through the porous inner shell 118 and into the drain cavity 128 at locations along the drain 102 where the annular cavity 124 is surrounding the porous inner shell 118. The pressurized air 114 passing through the inner shell 118 and into powdered build material within the drain cavity 128 aerates and fluidizes the material. Fluidizing the build material facilitates the flow of the material through the drain under the force of gravity in the downward direction as indicated by the downward direction arrow 130.

FIG. 6 shows a block diagram illustrating an example 3D printing system 132 in which a build material hopper 100 comprising a fluidizing drain 102 may be implemented. The system 132 is shown by way of an example only and is not intended to represent a complete 3D printing system. An example 3D printing system 132 can print 3D objects in a build area 134 using powdered or other build material transported throughout the 3D printing system 132 by a pneumatic build material conveyance system 136. In some examples, a pressure blower 138 can pull air through the pneumatic build material conveyance system 136 creating a vacuum within the transport tubes 137 to move powdered or other build material through the system 136 as the build material is released into the tubes 137 from a build material storage source, such as one or multiple build material hoppers, 140, 142, 144. In some examples, a pressure blower 138 can create a positive pressure within the transport tubes 137 to move the build material through the system 136. In some examples, a feeder mechanism (not shown) may be positioned between a fluidizing drain 102 and a transport tube 137 to facilitate the movement of build material between different pressure environments, such as between a first pressure environment of a hopper 100 and a second pressure environment of a transport tube 137. Build material hoppers can include, for example, a new build material hopper 140, a recycled build material hopper 142, and a reclaimed build material hopper 144.

As described herein with respect to various examples, a build material hopper 100 (e.g., hoppers 140, 142, 144 of FIG. 6) comprising a fluidizing drain 102 can facilitate the flow of build material, such as powdered build material, through the drain of the hopper and into another area of a 3D printing system 132 under the force of gravity. In some examples, hoppers can dispense build material through a fluidizing drain 102 into a pneumatic build material conveyance system 136 of a 3D printing system 132. In the example 3D printing system 132 shown in FIG. 6, therefore, a number of build material hoppers 140, 142, and 144, for example, each comprising a fluidizing drain 102 may be implemented to deliver build material to the pneumatic build material conveyance system 136 of 3D printing system 132.

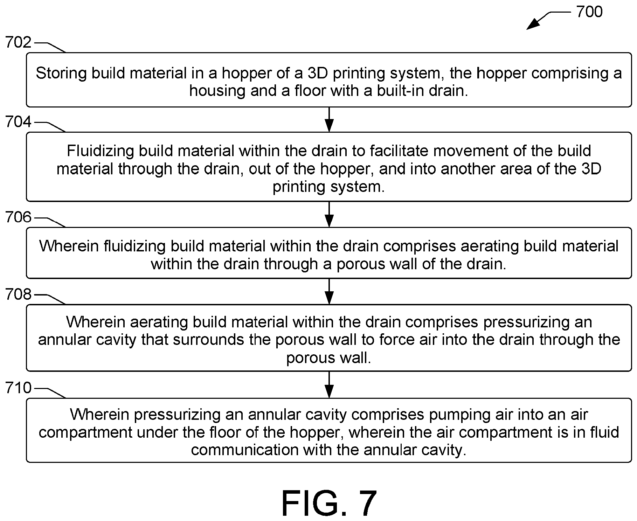

FIG. 7 shows a flow diagram of an example method 700 of providing build material, such as powdered build material, from a hopper in a 3D printing system. The example method 700 is associated with examples discussed above with respect to FIGs. 1 - 6, and details of the operations shown in method 700 can be found in the related discussion of such examples. The method 700 may include more than one implementation, and different implementations of method 700 may not employ every operation presented in the flow diagram of FIG. 7. Therefore, while the operations of method 700 are presented in a particular order within the flow diagram, the order of their presentation is not intended to be a limitation as to the order in which the operations may actually be implemented, or as to whether all of the operations may be implemented. For example, one implementation of method 700 might be achieved through the performance of a number of initial operations, without performing some subsequent operations, while another implementation of method 700 might be achieved through the performance of all of the operations.

Referring now to the flow diagram of FIG. 7, an example method of providing build material (e.g., powder) from a hopper in a 3D printing system begins at block 702 with storing build material in a hopper of the 3D printing system, where the hopper comprises a housing and a floor with a built-in drain. As shown at block 704, the method 700 can include fluidizing build material within the drain to facilitate movement of the build material through the drain, out of the hopper, and into another area of the 3D printing system. In some examples, as shown at block 706, fluidizing build material within the drain can include aerating build material within the drain through a porous wall of the drain. In some examples, as shown at block 708, aerating build material within the drain can include pressurizing an annular cavity that surrounds the porous wall to force air into the drain through the porous wall. In some examples, as shown at block 710, pressurizing the annular cavity can include pumping air into an air compartment under the floor of the hopper. The air compartment can be in fluid communication with the annular cavity.

## Claims

1. A build material hopper (100) for a 3D printing system, comprising:
a container housing (105), a top (108) for receiving build material, and a bottom (104);
a sub-floor compartment (110) under the bottom of the container housing; and
a fluidizing drain (102) assembled in the bottom of the container housing, wherein the fluidizing drain comprises:
a porous inner wall (118);
an air-impermeable outer wall (120);
an annular cavity (124) outside the porous inner wall, the annular cavity to receive pressurized air to pass into the drain through the porous inner wall;
a sealing system located between the porous inner wall (118) and the outer wall (120) to create a seal around a lower perimeter of the annular cavity to seal the annular cavity; and
a plurality of air inlet ports (116) around an upper perimeter (113) of the annular cavity, the sub-floor compartment in fluid communication with the air inlet ports of the annular cavity, the air inlet ports to pass the pressurized air supplied to the sub-floor compartment into the annular cavity;
the fluidizing drain to aerate build material within the drain to facilitate passing build material through the drain; and
a pump (112) to pump the pressurized air into the sub-floor compartment (110).

2. A hopper (100) as in claim 1, wherein the sealing system is an O-ring (126).

3. A hopper (100) as in claim 2, wherein the porous inner wall (118) comprises an annular slot to seat the O-ring (126) between the outer wall (120) and the porous inner wall.

4. A hopper (100) as in claim 1, further comprising corresponding coupling holes (122) formed in the bottom of the container housing (105), the sub-floor compartment (110), the porous inner wall (118), and the outer wall (120), to align and fasten the drain (102) to the bottom of the container housing.

5. A hopper (100) as in claim 4, further comprising a compressible gasket (123) assembled between the inner wall (118) of the fluidizing drain (102) and the bottom of the container housing (105) to prevent pressurized air from escaping between the fluidizing drain and the bottom of the container housing.

6. A method of providing build material from a hopper (100) in a 3D printing system (132) comprising:
storing build material in a hopper according to any of claims 1-6;
providing pressurized air to the sub-floor compartment (110) to cause the pressurized air to pass into the drain (120) via the air inlet ports (116), the annular cavity (124), and through the porous inner wall (118), thereby fluidizing build material within the drain (102) to facilitate movement of the build material through the drain, out of the hopper, and into another area of the 3D printing system.

7. A 3D printing system (132) comprising the build material hopper of any of claims 1-5.

## Patentansprüche

1. Baumaterialtrichter (100) für ein 3D-Drucksystem, der Folgendes umfasst:
ein Behältergehäuse (105), eine Oberseite (108) zum Aufnehmen von Baumaterial und eine Unterseite (104); ein Unterbodenfach (110) unter der Unterseite des Behältergehäuses; und
einen Fluidisierungsauslass (102), der in der Unterseite des Behältergehäuses montiert ist, wobei der Fluidisierungsauslass Folgendes umfasst:
eine poröse Innenwand (118);
eine luftundurchlässige Außenwand (120);
einen ringförmigen Hohlraum (124) außerhalb der porösen Innenwand, wobei der ringförmige Hohlraum dazu dient, Druckluft aufzunehmen, um durch die poröse Innenwand in den Auslass zu gelangen;
ein Abdichtungssystem, das zwischen der porösen Innenwand (118) und der Außenwand (120) angeordnet ist, um eine Abdichtung um einen unteren Umfang des ringförmigen Hohlraums herum zu erzeugen, um den ringförmigen Hohlraum abzudichten; und
eine Vielzahl von Lufteinlassöffnungen (116) um einen oberen Umfang (113) des ringförmigen Hohlraums herum, wobei das Unterbodenfach in Fluidverbindung mit den Lufteinlassöffnungen des ringförmigen Hohlraums steht, wobei die Lufteinlassöffnungen dazu dienen, dass die Druckluft, die dem Unterbodenfach zugeführt wird, in den ringförmigen Hohlraum gelangt;
wobei der Fluidisierungsauslass dazu dient, Baumaterial innerhalb des Auslasses zu belüften, um ein Gelangen von Baumaterial durch den Auslass zu erleichtern; und
eine Pumpe (112), um die Druckluft in das Unterbodenfach (110) zu pumpen.

2. Trichter (100) nach Anspruch 1, wobei das Abdichtungssystem ein O-Ring (126) ist.

3. Trichter (100) nach Anspruch 2, wobei die poröse Innenwand (118) einen ringförmigen Schlitz umfasst, um den O-Ring (126) zwischen der Außenwand (120) und der porösen Innenwand einzupassen.

4. Trichter (100) nach Anspruch 1, der ferner entsprechende Kopplungslöcher (122) umfasst, die in der Unterseite des Behältergehäuses (105), dem Unterbodenfach (110), der porösen Innenwand (118) und der Außenwand (120) ausgebildet sind, um den Auslass (102) an der Unterseite des Behältergehäuses auszurichten und zu befestigen.

5. Trichter (100) nach Anspruch 4, der ferner eine komprimierbare Dichtung (123) umfasst, die zwischen der Innenwand (118) des Fluidisierungsauslasses (102) und der Unterseite des Behältergehäuses (105) montiert ist, um zu verhindern, dass Druckluft zwischen dem Fluidisierungsauslass und der Unterseite des Behältergehäuses austritt.

6. Verfahren zum Bereitstellen von Baumaterial aus einem Trichter (100) in einem 3D-Drucksystem (132), das Folgendes umfasst:
Speichern von Baumaterial in einem Trichter nach einem der Ansprüche 1 bis 6;
Bereitstellen von Druckluft an das Unterbodenfach (110), um die Druckluft zu veranlassen, über die Lufteinlassöffnungen (116), den ringförmigen Hohlraum (124) und durch die poröse Innenwand (118) in den Auslass (120) zu gelangen, wobei dadurch Baumaterial innerhalb des Auslasses (102) fluidisiert wird, um eine Bewegung des Baumaterials durch den Auslass, aus dem Trichter und in einen anderen Bereich des 3D-Drucksystems zu erleichtern.

7. 3D-Drucksystem (132), das den Baumaterialtrichter nach einem der Ansprüche 1 bis 5 umfasst.

## Revendications

1. Trémie de matériau de construction (100) destinée à un système d'impression 3D, comprenant :
un logement de récipient (105), une partie supérieure (108) destinée à recevoir un matériau de construction, et une partie inférieure (104) ;
un compartiment sous-plancher (110) sous la partie inférieure du logement de récipient ; et
un drain de fluidisation (102) assemblé dans la partie inférieure du logement de récipient, le drain de fluidisation comprenant :
une paroi interne poreuse (118) ;
une paroi externe imperméable à l'air (120) ;
une cavité annulaire (124) à l'extérieur de la paroi interne poreuse, la cavité annulaire permettant de recevoir de l'air sous pression à passer dans le drain à travers la paroi interne poreuse ;
un système d'étanchéité situé entre la paroi interne poreuse (118) et la paroi externe (120) pour créer un joint autour d'un périmètre inférieur de la cavité annulaire pour sceller la cavité annulaire ; et
une pluralité d'orifices d'entrée d'air (116) autour d'un périmètre supérieur (113) de la cavité annulaire, le compartiment sous-plancher étant en communication fluidique avec les orifices d'entrée d'air de la cavité annulaire, les orifices d'entrée d'air permettant de faire passer l'air sous pression fourni au compartiment sous-plancher dans la cavité annulaire ;
le drain de fluidisation pour aérer le matériau de construction à l'intérieur du drain afin de faciliter le passage du matériau de construction à travers le drain ; et
une pompe (112) pour pomper l'air sous pression dans le compartiment sous-plancher (110).

2. Trémie (100) selon la revendication 1, le système d'étanchéité étant un joint torique (126).

3. Trémie (100) selon la revendication 2, la paroi interne poreuse (118) comprenant une fente annulaire pour loger le joint torique (126) entre la paroi externe (120) et la paroi interne poreuse.

4. Trémie (100) selon la revendication 1, comprenant en outre des trous de couplage correspondants (122) formés dans la partie inférieure du logement de récipient (105), le compartiment sous-plancher (110), la paroi interne poreuse (118) et la paroi externe (120), pour aligner et fixer le drain (102) sur la partie inférieure du logement de récipient.

5. Trémie (100) selon la revendication 4, comprenant en outre un joint d'étanchéité compressible (123) assemblé entre la paroi interne (118) du drain de fluidisation (102) et la partie inférieure du logement de récipient (105) pour empêcher l'air sous pression de s'échapper entre le drain de fluidisation et la partie inférieure du logement de récipient.

6. Procédé de fourniture d'un matériau de construction à partir d'une trémie (100) dans un système d'impression 3D (132) comprenant :
le stockage de matériau de construction dans une trémie selon l'une quelconque des revendications 1 à 6 ;
la fourniture de l'air sous pression au compartiment sous-plancher (110) pour amener l'air sous pression à passer dans le drain (120) par l'intermédiaire des orifices d'entrée d'air (116), la cavité annulaire (124) et à travers la paroi interne poreuse (118), fluidisant ainsi un matériau de construction à l'intérieur du drain (102) pour faciliter le mouvement du matériau de construction à travers le drain, hors de la trémie, et dans une autre zone du système d'impression 3D.

7. Système d'impression 3D (132) comprenant la trémie de matériau de construction selon l'une quelconque des revendications 1 à 5.
